# EUROPEAN PATENT APPLICATION

(11) **EP 3 926 792 A1**
(43) Date of publication of application: **22.12.2021**
(21) Application number: 20180001.8
(22) Date of filing: 15.06.2020
(51) Int. Cl.: H02K 1/18, H02K 7/18, H02K 1/14

(54) **SEGMENT SUPPORT STRUCTURE FOR A GENERATOR OF A WIND TURBINE**

(71) Applicant: Siemens Gamesa Renewable Energy A/S, 7330 Brande (DK)
(72) Inventor: Jensen, Kim Robert Braun, 8600 Silkeborg (DK)
(74) Representative: Aspacher, Karl-Georg

(57) **Abstract**

A segment support structure (50) for a stator (20) of a generator (11) for a wind turbine (1), wherein the segment support structure (50) extends along a longitudinal axis (Y) and comprises a casted assembly having:
a first pressure plate (240) at one axial end of the segment support structure (50) and a second pressure plate (241) at the opposite axial end of the segment support structure (50).
a plurality of carrier elements (200) extending from the first pressure plate (240) to the second pressure plate (241) .

## Description

### Field of the invention

The invention relates to a segment support structure for a generator of a wind turbine, a stator for a generator of a wind turbine comprising a plurality of such segment support structures and method for manufacturing the same.

### Art background

Wind turbines typically include multiple blades for generating mechanical rotation energy. A generator within the wind turbine is configured to generate electrical power as the blades are driven to rotate by the wind. Wind turbines are therefore designed to efficiently translate wind energy into rotational motion, thereby providing the generator with sufficient rotational energy for electrical power generation.

The generator of the wind turbine comprises a stator and a rotor.

The stator normally comprises a frame body longitudinally extending along a longitudinal axis and including a plurality of teeth protruding according to a radial direction from the stator yoke. In the stator a plurality of slots is also defined, each slot being delimited circumferentially by two adjacent teeth. Each slot houses a respective winding. Lamination sheets are attached one after another along the axial direction of the stator and form a lamination stack of the stator, where the coils for electrical power generation are provided. The rotor comprises a plurality of magnets. Upon rotation of the magnets, rotational energy is converted into electrical power.

There are designs, which have the rotor arranged radially outward with respect to the stator. In a different design the stator is arranged radially outward with respect to the rotor.

The lamination sheet stacks of the stator need to be placed at a specified distance to the magnets of the rotor. To this end, a support structure is incorporated in the stator between the lamination sheet section of the stator and the rotor.

Such a support structure may be circumferentially segmented, i.e. the support structure and the lamination sheet stacks may be formed by circumferentially joining a plurality of respective segments. A segmented stator comprises a plurality of circumferential segment, each having a respective segment support structure and a respective lamination sheet stack. Such a structure permits to increase the radial dimensions of stators with respect to non-segmented solutions.

It is desirable that a support structure for stator has high radial, tangential and torsional stiffness. This may be particularly critical in stator of great dimensions with a segmented structure. The achievement of a cost-effective structure is furtherly desirable.

### Summary of the invention

It may be therefore an object of the present invention to provide a new support structure for a segmented stator, in particular for use in a generator of a wind turbine, which fulfils the requirements regarding the mechanical properties, in particularly stiffness, and which at the same time can be manufactured in a cost-efficient way.

This object may be solved by a segment support structure, a stator and a method for manufacturing a stator according to the subject matter of the independent claim.

One aspect of the invention relates to a segment support structure for a stator of a generator for a wind turbine. The segment support structure extends along a longitudinal axis and comprises:
a first pressure plate at one axial end of the segment support structure and a second pressure plate at the opposite axial end of the segment support structure,
a plurality of carrier elements extending from the first pressure plate to the second pressure plate,
wherein the first pressure plate, the second pressure plate and the plurality of carrier elements are components of a single casted element.

Another aspect of the invention relates to a method for manufacturing a stator for a generator for a wind turbine. The method comprises:
manufacturing a plurality of segment support structures as above defined, the manufacturing method including a step of casting the first pressure plate, the second pressure plate, the plurality of carrier elements and the at least one stiffener as components of a single element,
machining the plurality of segment support structures,
providing a lamination sheet section,
coupling the lamination sheet section with the plurality of carrier elements by means of a plurality of fixing connections,
circumferentially joining the plurality of segment support structures.

According to possible embodiments of the invention, the segment support structure further comprises at least one stiffener axially interposed between the first pressure plate to the second pressure plate, the stiffener connecting at least two carrier elements of plurality of carrier elements. Together with the first pressure plate, the second pressure plate and the plurality of carrier elements, the at least one stiffener may be also components of the single casted element.

Such casted structure provides a higher degree of design freedom, i.e. it may be used to provide stator of increased dimensions, while maintaining the structural strength of a unified body. Corners are less sharp, thus reducing structural stress hot spots. The unified body design integrates the pressure plates to hold the axial members in place. Welding is avoided in the segment support structure.

The present invention provides high radial stiffness. Warping of the support structure is avoided, which is due to the heat affected zones caused by welding. This determines less need to adjust the airgap in the assembled generator. Further advantages are lower costs for material, less parts handling and reduced labor cost. Machining of ductile cast iron is less demanding on tooling and is therefore faster. The design of the present invention allows for use of a lower number of circumferential stiffeners, thus providing better cooling as the free area between axial structural members is increased, which results in less reduction of pressure drop.

According to possible embodiments of the invention, the plurality of carrier elements may be I-beams.

As "I-beam", which may also be designated also "double-T beam, it is meant a beam having a cross-section in the shape of a I letter and including two horizontal elements, or flanges, and a vertical element, or web, connecting the two horizontal element. According to embodiments of the present invention, the horizontal elements are identified as top and base sections and are oriented tangentially, while the vertical element or section is oriented radially. In such embodiments, the cast support structure combines structural stiffness with the profile of I-beams, where the top section may be used of supporting the lamination sheet stack.

According to possible embodiments of the invention, at least a portion of the carrier elements include a hole having an opening on the top section configured to be coupled to a lamination sheet section of the stator by means of a fixing connection. A through hole may be provided having a first opening on the top section and a second opening base section on the base section, the trough hole being configured to be coupled to a lamination sheet section of the stator by means of a fixing connection. In the latter embodiment, the through hole extends through the vertical section of the I-beam, providing the clamping medium for the lamination sheet stack.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic section of a wind turbine including an electrical generator with a stator according to the present invention.
- Figure 2: shows an exploded view of an electrical generator with a stator according to the present invention.
- Figure 3: shows an axonometric view of a segment of the stator of Fig. 2.
- Figure 4: shows a first component of the segment of Fig. 3.
- Figure 5: shows a second component of the segment of Fig. 3.
- Figure 6: shows an axonometric view of a segment support structure for the segment of figure 3.
- Figure 7: shows a sectional view of the segment support structure of figure 6, in a second axonometric view from the top.

### Detailed Description

The illustrations in the drawings are schematic. It is noted that in different figures, similar or identical elements are provided with the same reference signs.

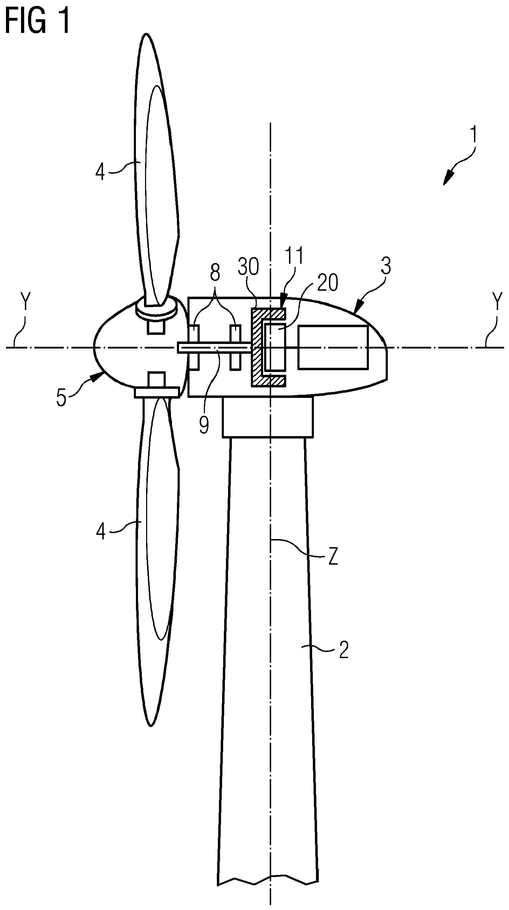

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises at least a wind rotor 5 having a hub and at least one blade 4 (in the embodiment of Figure 1, the wind rotor comprises three blades 4, of which only two blades 4 are visible). The wind rotor 5 is rotatable around a rotational longitudinal axis Y. The blades 4 extend substantially radially with respect to the longitudinal axis Y. In general, when not differently specified, the terms axial, radial and circumferential in the following are made with reference to the rotational longitudinal axis Y. The wind turbine 1 comprises at least one electric generator 11, including a stator 20 and a rotor 30. The rotor 30 is rotatable with respect to the stator 20 about the rotational longitudinal axis Y. The wind rotor 5 is coupled with the rotor 30 and both are connected to an outer ring of a main bearing assembly 8. The outer ring of the main bearing assembly 8 rotates about the rotational longitudinal axis Y with respect to a static inner ring, which is coupled with a main shaft 9 extending along the longitudinal axis Y.

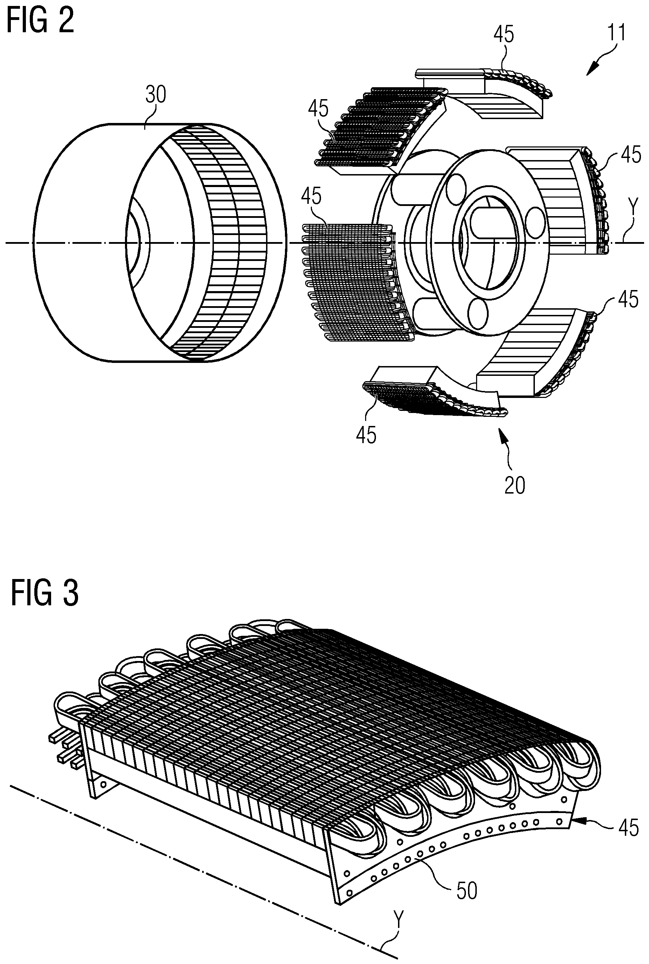

**Figure 2** shows an exploded view of the electrical generator 11 with the rotor 30 and the stator 20. The stator 20 comprises a cylindrical inner core to which six segments 45 are attached. Each segment 45 has a circumferential angular extension of 60°. According to other embodiments of the present invention, the stator 20 comprises a plurality of segments having a number of segments different from six. According to another possible embodiment of the present invention, the stator 20 is not segmented, i.e. the stator includes one single segment covering the entire angular extension of 360°. The rotor 30 has a conventional structure with a plurality of circumferentially distributed rotor permanent magnets.

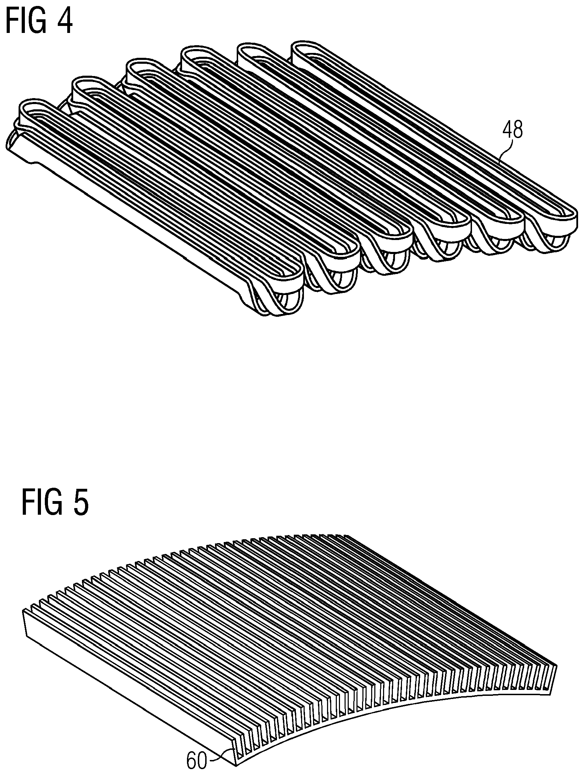

**Figures 3** to **5** show more in details a stator segment 45. The stator segment 45 has a conventional structure comprising a plurality of teeth circumferentially interposed between a plurality of slots. The teeth protrude according to the radial direction. The stator segment 45 further comprises coil windings 48 inserted in the slots of the segment 45. Teeth, slots and windings 48 are not a specific object of the present invention and therefore not described in further details. Each segment 45 includes a segment support structure 50 and a lamination stack 60 supported by the segment support structure 50. The lamination stack 60 comprises a plurality of lamination sheets which are attached one after another along the longitudinal axis Y of the stator 20. The lamination stack 60 is fixed to the support structure 50 as better specified in the following. When the stator segments 45 are circumferentially joined, the assembly made by all the support structures 50 and the lamination stack 60 constitutes a stator body.

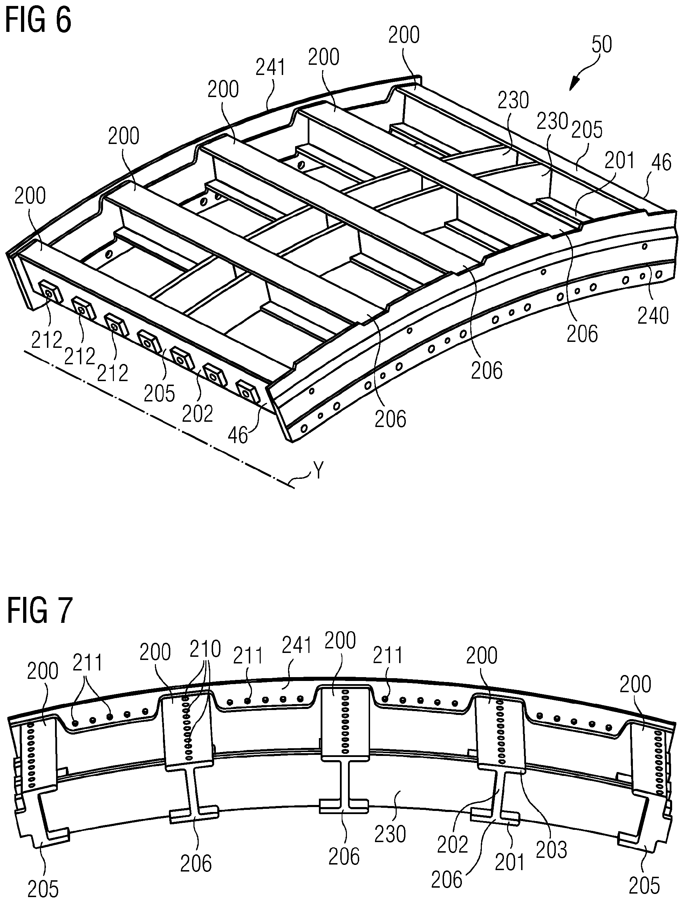

**Figures 6** shows a segment support structure 50 for a segment 45 according to an embodiment of the invention, in an axonometric complete view.

**Figures 7** shows the segment support structure 50 in a sectional view showing only the half of the segment support structure 50. The sectional view of figure 7 is obtained according to a plane orthogonal to the longitudinal axis Y and intermediate between two axial ends of the segment support structure 50.

The segment support structure 50 is configured for use in a stator of a wind turbine. The segment support structure 50 of figures 6 and 7 comprises a plurality of carrier elements 200 axially extending between a first pressure plate 240 and a second pressure plate 241. Five carrier elements 200 are shown in the embodiment of figures 6 and 7, but, according to other embodiment of the present invention, any other number of carrier elements may be provided. The first pressure plate 240 is provided at one axial end of the segment support structure 50 and the second pressure plate 241 is provided at the opposite axial end of the segment support structure 50. The first pressure plate 240, the second pressure plate 241 and the plurality of carrier elements 200 are components of a single casted element. The segment support structure 50 circumferentially extends between two circumferential ends 46. At each circumferential end 46, a respective carrier element 200 is provided, the carrier element being a C-beam 205. Each C-beam 205 comprises a base section 201, a top section 203 and a vertical section 202 connecting respective edges of the base section 201 and the top section 203. The base section 201 and the top section 203 are tangentially oriented, while the vertical section 202 is radially oriented. The vertical section 202 of the C-beams 205 may be used for circumferentially joining the plurality of segments 45, for example by means of a plurality of bolted connections or by welding. A plurality of carrier elements 200 comprised between the C-beam 205 are I-beams 206 (three I-beams 206 are shown in the embodiment of figures 6 and 7, but, according to other embodiment of the present invention, any other number of I-beams may be provided). According to an embodiment of the present invention (not shown), C-beam are not present and only I-beams are provided. Each I-beam 206 comprises a base section 201, a top section 203 and a vertical section 202 connecting respective midpoints the base section 201 and the top section 203. The top sections 203 of the I-beams 206 and C-beams 205 are configured to be coupled to a lamination sheet section 60 of the stator 20. The segment support structure 50 may further comprise at least one stiffener 230 axially interposed between the first pressure plate 240 to the second pressure plate 241. The stiffeners 230 may be circumferentially oriented and connect at least two carrier elements 200 of plurality of carrier elements 200. In the embodiment of figures 6 and 7, two circumferential parallel stiffeners 230 connect all the five carrier elements 200 extending tangentially from one to the other of the C-beam 205. Together with the first pressure plate 240, the second pressure plate 241 and the plurality of carrier elements 200, the stiffeners 230 may be components of a single casted element.

According to a method for manufacturing the stator 20, a plurality of segment support structures 50 are manufactured as semi-finished products in a step of casting the first pressure plate 240, the second pressure plate 241, the plurality of carrier elements 200 as components of a single element. In such semi-finished products at least one stiffener 230 may be also included. After the casting, machining the plurality of segment support structures 50 is performed. Machining steps are performed for providing a first plurality of fixing elements 210 for coupling the lamination sheet section 60 to the segment support structures 50. The fixing elements 210 includes through holes having a first opening on the top section 203 and a second opening base section 201 on the base section 201, the through holes being configured to be coupled to a lamination sheet section 60 of the stator 20. Such through holes may be provided through the vertical sections 202 of the carrier elements 200. Machining steps may be further performed for providing a second plurality of fixing elements 211 on the first pressure plate 240 and the second pressure plate 241. The fixing elements 211 includes through holes, which may be used for connecting the fingerplates (not shown in the figures) to the segment support structures 50. As "Fingerplates" it is meant plates having the same circumferential shape of the lamination sheet section 60 and are used for axially clamping the lamination sheet section 60. The lamination sheet section 60 may be therefore clamped radially (through bolts passing through the holes of the first fixing elements 210) and axially (through bolts passing through the holes of the second fixing elements 211), thus reducing the use of welding. Machining steps may be further performed for providing a third plurality of fixing elements 212 on the vertical sections 202 at the circumferential ends 46. The fixing elements 212 may include holes to be coupled with respective bolts for circumferentially joining the plurality of segment support structures 50. This may further reduce eliminating the use of welding. According to the present invention, the use of welding may be completed avoided when manufacturing the stator 20.

It should be noted that the term "comprising" does not exclude other elements or steps and "a" or "an" does not exclude a plurality. Elements described in association with different embodiments may be combined. It should also be noted that reference signs in the claims should not be construed as limiting the scope of the claims.

## Claims

1. A segment support structure (50) for a stator (20) of a generator (11) for a wind turbine (1), wherein the segment support structure (50) extends along a longitudinal axis (Y) and comprises:
a first pressure plate (240) at one axial end of the segment support structure (50) and a second pressure plate (241) at the opposite axial end of the segment support structure (50),
a plurality of carrier elements (200) extending from the first pressure plate (240) to the second pressure plate (241),
wherein the first pressure plate (240), the second pressure plate (241) and the plurality of carrier elements (200) are components of a single casted element.

2. The segment support structure (50) according to claim 1, wherein the segment support structure (50) further comprises at least one stiffener (230) axially interposed between the first pressure plate (240) to the second pressure plate (241), the stiffener connecting at least two carrier elements (200) of plurality of carrier elements (200), wherein the first pressure plate (240), the second pressure plate (241), the plurality of carrier elements (200) and the at least one stiffener (230) are components of a single casted element.

3. The segment support structure (50) according to claim 1 or 2, wherein at least a portion of the plurality of carrier elements (200) are I-beams (206).

4. The segment support structure (50) according to any of the previous claims, wherein at least a portion of the plurality of carrier elements (200) are C-beams (205).

5. The segment support structure (50) according to any of the previous claims, wherein at least a portion of the carrier elements (200) include a top section (203) configured to be coupled to a lamination sheet section (60) of the stator (20) by means of a fixing connection.

6. The segment support structure (50) according to claim 5, wherein at least a portion of the carrier elements (200) include a hole having an opening on the top section (203) configured to be coupled to a lamination sheet section (60) of the stator (20) by means of a fixing connection.

7. The segment support structure (50) according to claim 6, wherein at least a portion of the carrier elements (200) may include a further base section (201) and a through hole having a first opening on the top section (203) and a second opening base section (201) on the base section (201), the trough hole being configured to be coupled to a lamination sheet section (60) of the stator (20) by means of a fixing connection.

8. The segment support structure (50) according to any of the preceding claims, wherein the segment support structure (50) comprises a plurality of stiffeners (230).

9. The segment support structure (50) according to claim 8, wherein the plurality of stiffeners (230) are circumferentially oriented.

10. A stator (20) for a generator (11) for a wind turbine (1), wherein the stator (20) comprises a plurality of circumferential segments (45), each circumferential segment (45) comprising:
a lamination sheet stack (60), and
a support structures segment (50) according to any of the previous claims.

11. A generator (11) for a wind turbine (1) including a stator according to claim 9.

12. A wind turbine (1) including a generator (11) according to claim 10.

13. Method for manufacturing a stator (20) for a generator (11) for a wind turbine (1), the method comprising
manufacturing a plurality of segment support structures (50) according to any of the previous claims 1 to 8, the manufacturing method including a step of casting the first pressure plate (240), the second pressure plate (241), the plurality of carrier elements (200) and the at least one stiffener (230) as components of a single element,
machining the plurality of segment support structures (50),
providing a lamination sheet section (60),
coupling the lamination sheet section (60) with the plurality of carrier elements (220) by means of a plurality of fixing connections,
circumferentially joining the plurality of segment support structures (50).
